# EUROPÄISCHE PATENTSCHRIFT

(11) **EP 2 046 478 B1**
(45) Veröffentlichungstag und Bekanntmachung des Hinweises auf die Patenterteilung: **05.01.2011**
(21) Anmeldenummer: 07787441.0
(22) Anmeldetag: 12.07.2007
(51) Int. Cl.: B01D 46/24

(54) **FILTEREINHEIT MIT EINEM KONISCHEN GEWINDE**
FILTER UNIT HAVING A CONICAL THREAD
FILTRE À FILETAGE CONIQUE

(30) Priorität: 03.08.2006 DE 202006011990 U
(43) Veröffentlichungstag der Anmeldung: 15.04.2009
(60) Teilanmeldung: 10172513.3
(73) Patentinhaber: MANN+HUMMEL GmbH, 71638 Ludwigsburg (DE)
(72) Erfinder: DWORATZEK, Klemens, 68535 Edingen (DE); BAUDER, Ralf, 68775 Ketsch (DE); ACKERMANN, Steffen, 67346 Speyer (DE)
(86) Internationale Anmeldenummer: PCT/EP2007/057170
(87) Internationale Veröffentlichungsnummer: WO 2008/015088

(56) Entgegenhaltungen:
- WO-A-2007/085427
- DE-A1- 2 706 017
- DE-A1-102004 029 225
- US-A- 5 961 678

## Beschreibung

### Technisches Gebiet

Die Erfindung betrifft eine Filtereinheit mit einem Gehäuse und einem darin einsetzbaren, zylindrischen Filterelement welches endseitig jeweils mit eine Endscheibe verbunden ist.

### Stand der Technik

Filtereinheiten sind bekannt, die mit ihrem Gehäuse ein im Wesentlichen zylindrisches Filterelement umfassen, das nach Abnahme eines Deckels zugänglich ist und ausgetauscht werden kann. Zur Befestigung des filterelements am Boden des Gehäuses sind Steck- und Schraubverbindungen bekannt. Steckverbindungen sind nicht immer ausreichend fest, um das Filterelement mit seinen Dichtflächen axial gegen den Gehäuseboden zu drücken, um eine gute Abdichtung zwischen Filterelement und Gehäuseboden bewirken zu können. Bei Schraubverbindungen müssen mehrere Gewindegänge vorgesehen sein, um eine ausreichend feste Verschraubung bewirken zu können, so dass das Losschrauben des Filterelements bei der Wartung entsprechend viel Zeit benötigt. Beim Aufschrauben des Deckels ist zusätlich sorgfältig darauf zu achten, dass die Gewindegänge von Deckeln und Gehäuse exakt ineinander eingeführt werden, da sonst das Filtergehäuse beschädigt werden kann.

Weiterhin sind Bajonettverschlüsse bekannt, die jedoch den Nachteil haben, nur punktuell hohe Anpresskräfte erzielen zu können, wohingegen die zwischen den Verriegelungen liegenden Bereiche, gerade bei verformbaren Kunststoffelementen, wegfedern können. Eine ringförmige Dichtung zwischen Deckel und Gehäuse wird gerade bei großen Durchmessern der Luftfiltereinheit bei einem Bajonettverschluss möglicherweise nicht ausreichend fest angepresst. Da der Vorschub in axialer Richtung bei einer Bajonettverriegelung nicht beeinflusst werden kann, ist die nötige Vorspannung der Dichtung vom Bediener nicht einstellbar, so dass möglicherweise aufgrund von Toleranzen in der Dichtungsgeometrie zu Undichtigkeiten kommen kann.

Aus der WO2007/085427 A1 ist ein Filterelement bekannt, welches an einer Endscheibe ein konisch ausgebildetes Innengewinde aufweist.

Aufgabe der Erfindung ist es somit, bei einer Filtereinheit der eingangs genannten Art eine im Betrieb feste und im Wartungsfall schnell zu lösende Verbindung von Filterelement und Gehäuse zu schaffen.

### Offenbarung der Erfindung

Diese Aufgabe wird durch eine Filtereinheit mit den Merkmalen des Anspruchs 1 gelöst.

Aufgrund der Konizität von Gewindeabsatz und Gewindebohrung ist eine Selbstzentrierung gegeben, wenn das Filterelement auf das Gehäuseelement geschoben wird. Es genügt dann eine Drehung um einen relativ kleinen Winkel, um eine Vielzahl von Gewindegängen miteinander in Eingriff zu bringen und so eine entsprechend hohe Festigkeit der Gewindeverbindung gegenüber axialen Kräften zu bewirken.

Als vorteilhaft hat sich hier ein Sägezahngewinde erwiesen, das als Bewegungsgewinde gut geeignet ist. Selbstverständlich sind auch andere Gewindeformen möglich.

Beispielsweise ist ein konisches Sägezahngewinde geeignet, das bei einem Durchmesser von ca. 100 mm 4 bis 5 Gewindegänge aufweist, die in einem Kegelwinkel von 6° bis 12° angeordnet sind.

Weitere vorteilhafte Ausgestaltungen der Erfindung sind den weiteren Unteransprüchen zu entnehmen und werden nachfolgend mit Bezug auf die Ausführungsbeispiele beschrieben.

### Kurze Beschreibung der Zeichnungen

Die Erfindung wird nachfolgend mit Bezug auf die Zeichnung näher erläutert. Die Figuren zeigen im Einzelnen:

Fig. 1 einen schematischen Schnitt durch eine erste Ausführungsform einer Filtereinheit,

Fig. 2 einen Schnitt durch eine Filtereinheit in perspektivischer Ansicht,

Fig. 3a, 3b ein Detail der ersten Ausführungsform in verschiedenen Montagestadien, jeweils im Schnitt und

Fig. 4 ein Detail einer zweiten Ausführungsform im Schnitt.

### Ausführungsform(en) der Erfindung

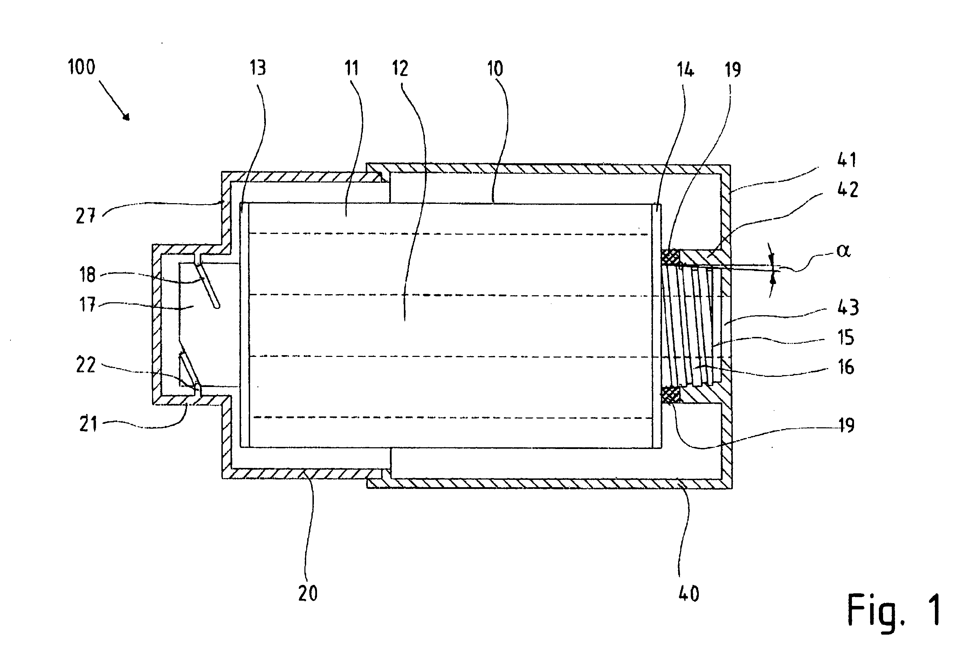

In Fig. 1 ist die erfindungsgemäße Filtereinheit 100 in einer schematischen Schnittdarstellung gezeigt. Im Inneren eines Gehäuses, welches aus einem Gehäusetopf 40 und einem Deckelelement 20 gebildet ist, ist ein Filterelement 10 angeordnet. Das Filterelement 10 umfasst einen Filterbalg 11, der beispielsweise aus einem zu einem Zylinderrohrkörper gewickelten, plissierten Filterpapier gebildet ist. Der Filterbalg 11 ist an seinen beiden Enden mit Endscheiben 13, 14 verbunden und bildet mit diesen zusammen einen zylindrischen, hohlen Körper. Luft gelangt an einem nicht dargestellten Einlaufstutzen des Gehäuses vom Außenumfang her ins Gehäuse, strömt durch den Filterbalg 11 des Filterelements 10 und dessen zentralen Strömungskanal 12 und strömt an einer zentral an einem Gehäuseboden 41 angeordneten Auslassöffnung 43 wieder heraus.

Dabei ist insbesondere die Abdichtung der ringförmig ausgebildeten Endscheibe 14 gegenüber dem Gehäusetopf bzw. dem Gehäuseboden 41 wesentlich, da ansonsten das Schmutz befrachtete Medium am Filterelement 10 vorbei direkt zum Auslassöffnung 43 strömen könnte. Hierzu besitzt die Endscheibe 14 einen Absatz 15 mit einem Gewinde 16. Der Absatz 15 ist konisch mit einem Kegelwinkel α von 8° bis 12° in Bezug auf die Mittelachse ausgebildet.

Gegenüberliegend befindet sich an dem Gehäuseboden 41 ein Absatz 42, der mit einem konischen Innengewinde 46 versehen ist, in welches das Außengewinde 16 des Absatzes 15 eingreifen kann. Über die Gewinde können Filterelement 10 und Gehäuseteil 40 fest miteinander verbunden werden.

Eine Ringdichtung 19 dichtet den Spalt zwischen der Endscheibe 14 des Filterelements 14 und dem Gehäuseboden 41 ab.

An der anderen Endscheibe 13 des Filterelements 10 ist ein Absatz 17 angeformt, der im dargestellten Ausführungsbeispiel mit einer Rille 18 versehen ist. Am Deckelelement 20 des Gehäuses ist an die Stirnseite 27 eine Überhöhung 21 angeformt, von der aus sich Zapfen 22 radial nach innen erstrecken, welche in die Rillen 18 eingreifen können, so dass eine Bajonettverbindung zwischen Deckelelement 20 und Filterelement 10 ausgebildet ist

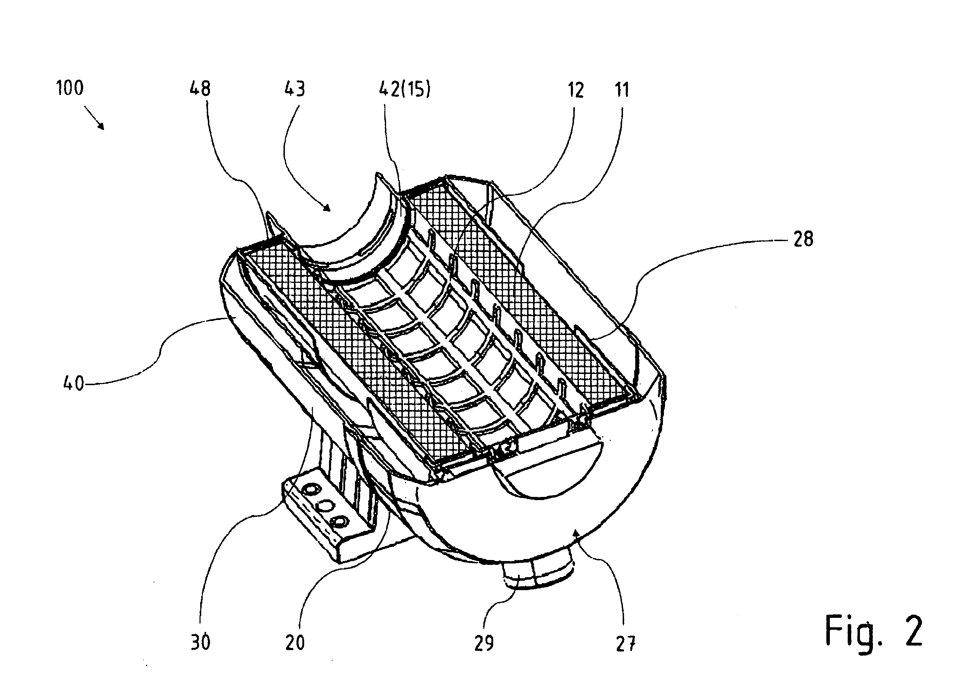

Die in Fig. 1 nur schematisch dargestellte Filtereinheit ist in Fig. 2 nochmals im Schnitt durch ein konkretes Ausführungsbeispiel gezeigt. Deutlich erkennbar ist an dem innen liegenden, ebenfalls geschnittenen Filterelement 10 ein Innenrohr, welches keine geschlossene Außenwandung aufweist, sondern eine Gitterstruktur hat, um eine radiale Luftströmung durch den Filterbalg 11 in den zentralen Strömungskanal 12 so wenig wie möglich zu behindern.

Im Bereich des Deckels 20 ist das filterelement 10 von einem zusätzlichen Kragen 28 umfasst, so dass sich zwischen der Außenseite des Kragens 28 und der Gehäusewandung des Gehäuseteils 20 ein Ringspalt ergibt. Gleiches gilt für die gegenüberliegende Seite, wo ein Kragen 48 das Filterelement 10 umfasst. Bei tangentialer Einströmung der Rohluft am Einlaufstutzen läuft die in das Gehäuse eingeleitete Luftmasse am Innenumfang der Gehäusewandung um, wodurch schwere Staubpartikel abgeschieden werden und an dem Abscheiderstutzen 29 abfließen können, und strömt dann radial von außen nach innen durch den Filterbalg 11.

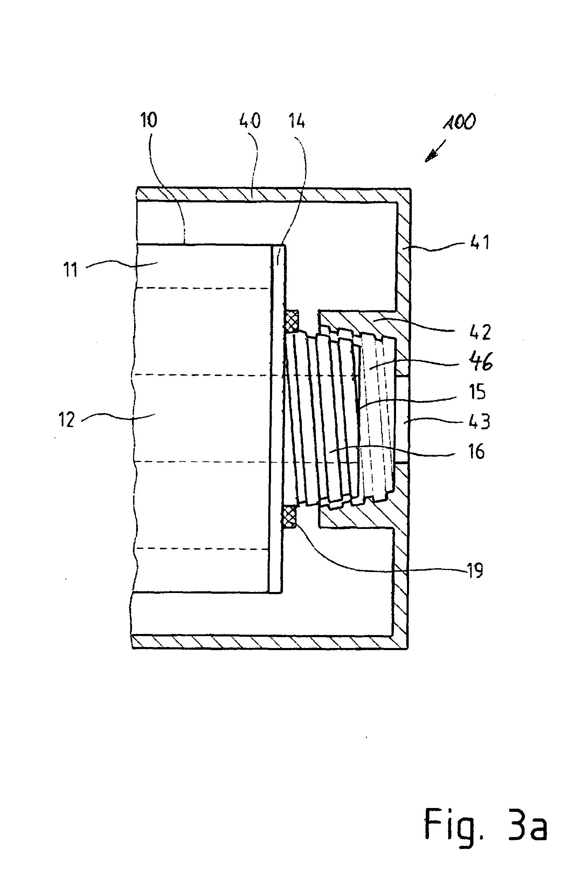

Fig. 3a zeigt im Detail die Verbindung zwischen dem Filterelement 10 und dem Gehäusetopf 40 der Filtereinheit 100. An die Endscheibe 14 des Filterelements 10 ist der Absatz 15 angeformt, der in Richtung des Gehäusebodens 41 hervorspringt und mit einem Außengewinde 16 versehen ist. Wie durch die gestrichelten Linien angedeutet, umschließt der Absatz 15 einen zentralen Strömungskanal 12 im Filterelement 10, der sich zu einer Auslassöffnung 43 im Gehäuseboden 41 hin öffnet. Am Gehäuseboden 41 ist der Absatz 42 angeformt, dessen konisches Innengewinde 46 kompatibel zum Außengewinde 16 des Absatzes 15 an der Endscheibe 14 ist.

In der in Fig. 3a eingestellten Situation befindet sich das Filterelement 10 mit seinem Absatz 15 bereits innerhalb der Gewindebohrung des Ansatzes 42, jedoch stehen aufgrund der Konizität die Gewindegänge bei dieser axialen Lage des Filterelements 10 gegenüber dem Gehäuseboden 41 noch nicht miteinander im Eingriff. Zur Verdeutlichung ist in Fig. 3a die Spaltweite zwischen Außengewinde 16 und Innengewinde 46 etwas überzeichnet.

Wird das Filterelement 10 noch weiter vorgeschoben, dann liegen jeweils die Stege des Gewindes 15 direkt vor den Rillen des Gewindes 46 und umgekehrt. Es genügt dann eine Drehung von etwa 1 bis 1 ½ Umdrehungen, um die Gewindegänge vollends in Eingriff zu bringen und das Filterelement 10 fest in den Absatz 42 des Gehäuseboden 41 einzuschrauben.

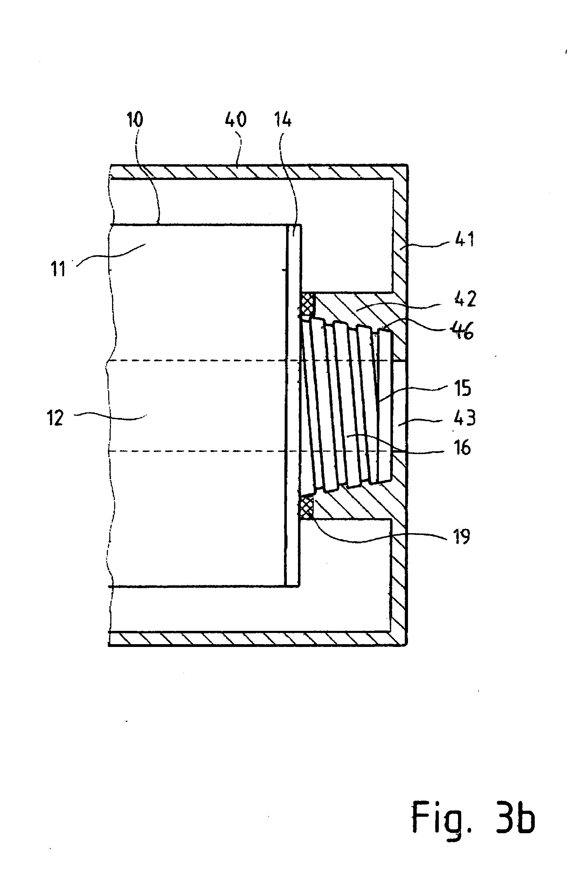

Die Endsituation ist in Fig. 3b dargestellt, wo die Gewinde 16, 46 miteinander im Eingriff sind und das Filterelement 10 soweit axial auf den Gehäuseboden 41 zu bewegt worden ist, dass eine Ringdichtung 19 fest angepresst wird. Diese verhindert, dass Luft von dem am Außenumfang des Gehäuseelements 40 befindlichen Strömungsweg am Fitterelement 10 vorbei durch die Auslassöffnung 43 strömen kann.

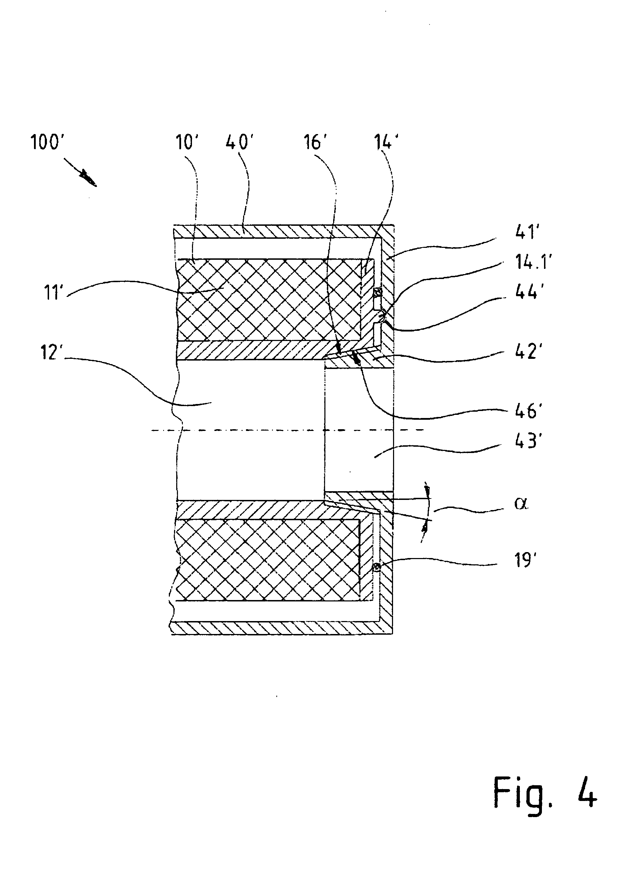

Fig. 4 zeigt ein kinematisch umgekehrtes Ausführüngsbeispiel einer Filtereinheit 100' , bei der am Gehäuseboden 41' ein Absatz 42' mit Außengewinde vorgesehen ist und am Filterelement 10' eine Gewindebohrung 16' vorgesehen ist. Auch bei diesem Ausführungsbeispiel wird die Verbindung über zwei konische Gewinde 16', 46' mit einem Kegelwinkel α hergestellt. Wiederum ist im Einbauzustand eine Ringdichtung 19' zwischen Endscheibe 14' und Gehäuseboden 41' verpresst.

Bei dem Ausführungsbeispiel nach Fig. 4 ist darüber hinaus vorgesehen, dass ein Rastzapfen 14.1' von der Endscheibe 14' hervorsteht. Wird das Filterelement 10' über die Gewinde 16', 46' verschraubt, so rastet der Rastvorsprung 14.1' in der vorgesehenen Endlage in einer entsprechenden Ausnehmung 44' am Gehäuseboden ein, wodurch eine Verdrehsicherung gegeben ist. Durch mehrere Ausnehmungen können verschiedene Rastpositionen vorgegeben werden.

## Patentansprüche

1. Filtereinheit (100) mit wenigstens einem Gehäuseelement (40) und einem darin einsetzbaren, zylindrischen Filterelement (10) welches endseitig jeweils mit einer Endscheibe (13, 14) verbunden ist, **dadurch gekennzeichnet, dass** ein Gehäuseboden (41) ein Gewinde (46) aufweist und das Filterelement (10) an wenigstens einer Endscheibe (13) einen Absatz (15) mit einem Gegengewinde (16) aufweist, wobei das Gewinde und das Gegengewinde jeweils konisch ausgebildet und miteinander in Eingriff zu bringen sind, wobei das Gewinde (46) ein Innengewinde und das Gegengewinde (16) ein Außengewinde ist.

2. Filtereinheit (100; 100') nach Anspruch 1, **dadurch gekennzeichnet, dass** die Gewinde (16, 46; 16' , 46') einen Teil eines sich entlang der Mittelachse des Filterelements (10; 10') und des Gehäuses (40; 40') erstreckenden Strömungskanal (12; 12') und/oder eine Gehäuseöffnung (43, 43') umschließen.

3. Filtereinheit (100; 100' nach Anspruch 1 oder 2, **dadurch gekennzeichnet, dass** das konische Gewinde (16, 46; 16' , 46') ein Sägezahngewinde ist.

4. Filtereinheit (100) nach wenigstens einem der Ansprüche 1 bis 3, **dadurch gekennzeichnet, dass** die Gewinde (16, 46; 16' , 46') einen Kegelwinkel α von 6° bis 12° aufweisen.

5. Filtereinheit (100, 100') nach wenigstens einem der Ansprüche 1 bis 4, **dadurch gekennzeichnet, dass** bei einem am Gehäuseboden (41, 41) angeschraubten Filterelement (10; 10') 4 bis 5 Gewindegänge beider Gewinde (16, 46; 16' , 46') miteinander in Eingriff sind.

6. Filtereinheit (100') nach wenigstens einem der Ansprüche 1 bis 5, **dadurch gekennzeichnet, dass** im Einbauzustand des Filterelements zwischen der Endscheibe (14') des Filterelements (10') und dem Gehäuseboden (41') in wenigstens einer Winkellage eine Rastverbindung ausgebildet ist.

7. Filtereinheit (100') nach Anspruch 6, **dadurch gekennzeichnet, dass** die Rastverbindung durch einen halbkugelförmigen Rastvorsprung (14.1') an der Endscheibe (14') und eine Ausnehmung (44') im Gehäuseboden (41') auszubilden ist.

## Claims

1. Filter assembly (100) with at least one housing element (40) and a cylindrical filter element (10) insertable therein which is connected at either end with an end plate (13, 14), **characterized in that** a housing bottom (41) features a thread (46) and that the filter element (10) features at at least one end plate (13) a protrusion (15) with a mating thread (16), the thread and the mating thread being designed conically each and engaged with each other, the thread (46) being an internal thread and the mating thread (16) being an external thread.

2. Filter assembly (100; 100') according to claim 1, **characterized in that** the threads (16, 46; 16', 46') enclose one part of a flow channel (12; 12') extending along the center axis of the filter element (10; 10') and the housing (40; 40') and/or a housing opening (43; 43').

3. Filter assembly (100; 100') according to claim 1 or 2, **characterized in that** the conical thread (16, 46; 16', 46') is a buttress thread.

4. Filter assembly (100) according to at least one of the claims 1 to 3, **characterized in that** the threads (16, 46; 16', 46') feature a cone angle α between 6° and 12°.

5. Filter assembly (100; 100') according to at least one of the claims 1 to 4, **characterized in that** 4 to 5 turns of both threads (16, 46; 16', 46') are engaged with each other on a filter element (10; 10') screwed onto the housing bottom (41; 41').

6. Filter assembly (100') according to at least one of the claims 1 to 5, **characterized in that** in an assembled condition of the filter element between the end plate (14') of the filter element (10') and the housing bottom (41') a snap-on connection is realized in at least one angular position.

7. Filter assembly (100') according to claim 6, **characterized in that** the snap-on connection is to be realized by a hemispherical locking projection (14.1') at the end plate (14') and a recess (44') in the housing bottom (41')

## Revendications

1. Unité de filtrage (100) avec au moins un élément de boîtier (40) et un élément filtrant (10) cylindrique pouvant y être inséré qui, à chaque extrémité, est relié à une plaque d'extrémité (13, 14), **caractérisée en ce qu'**un fond de boîtier (41) est doté d'un filet (46) et que l'élément filtrant (10) est doté au moins sur une plaque d'extrémité (13) d'un épaulement (15) avec un contre-filet (16), le filet et le contre-filet ayant respectivement une forme conique et devant être mis en prise l'un dans l'autre, le filet (46) étant un filet intérieur et le contre-filet (16) étant un filet extérieur.

2. Unité de filtrage (100 ; 100') selon la revendication 1, **caractérisée en ce que** les filets (16, 46 ; 16', 46') enrobent une partie d'un conduit (12 ; 12') évoluant le long de l'axe médian de l'élément filtrant (10 ; 10') et du boîtier (40 ; 40') et/ou une ouverture de boîtier (43 ; 43').

3. Unité de filtrage (100 ; 100') selon la revendication 1 ou 2, **caractérisée en ce que** le filet conique (16, 46 ; 16', 46') est un filet en dents de scie.

4. Unité de filtrage (100) selon au moins l'une des revendications 1 à 3, **caractérisée en ce que** les filets (16, 46 ; 16', 46') présentent un angle de cône α de 6° à 12 .

5. Unité de filtrage (100 ; 100') selon au moins l'une des revendications 1 à 4, **caractérisée en ce que**, sur un élément filtrant (10 ; 10') vissé au fond du boîtier (41, 41'), 4 à 5 pas de vis des deux filets (16, 46 ; 16', 46') sont en prise les uns dans les autres.

6. Unité de filtrage (100') selon au moins l'une des revendications 1 à 5, **caractérisée en ce que**, lorsque l'élément filtrant est monté entre la plaque d'extrémité (14') de l'élément filtrant (10') et le fond du boîtier (41'), un assemblage à crans est formé dans au moins une position angulaire.

7. Unité de filtrage (100') selon la revendication 6, **caractérisée en ce que** l'assemblage à crans doit être formé par une saillie de crantage hémisphérique (14.1') sur la plaque d'extrémité (14') et par un creux (44') ménagé dans le fond du boîtier (41').
